# DEMANDE DE BREVET EUROPEEN

(11) **EP 1 815 738 A1**
(43) Date de publication de la demande: **08.08.2007**
(21) Numéro de dépôt: 07002481.5
(22) Date de dépôt: 06.02.2007
(51) Int. Cl.: A01K 61/00

(54) **Système d'élevage de coquillages**

(30) Priorité: 06.02.2006 FR 0601066
(71) Demandeur: Maurouard, Guy, 14450 Grandcamp Maisy (FR)
(72) Inventeur: Maurouard, Guy, 14450 Grandcamp Maisy (FR)
(74) Mandataire: Maillet, Alain

(57) **Abrégé**

Système d'élevage de coquillages, notamment d'huîtres, comportant une table (1) constituée d'au moins deux longerons (11) parallèles entre eux et des casiers d'élevage (2) caractérisé en ce que chaque casier d'élevage (2) comporte une poche (21) pourvue de deux tourillons (22) à ses extrémités respectives, lesdits tourillons (22) étant de forme polygonale pour pouvoir respectivement reposer sur les longerons (11) de ladite table (1).

## Description

La présente invention a pour objet un système d'élevage de coquillages, notamment d'huîtres, comportant une table et des casiers.

L'élevage des coquillages est habituellement réalisé par l'intermédiaire de casiers dans lesquels sont placés les coquillages. Ces casiers sont posés sur des tables reposant sur le fond marin. Pour assurer la croissance de ces coquillages il est impératif de tourner régulièrement ces casiers, en moyenne trois fois par saison, afin de lutter contre le développement des algues qui empêchent la circulation de l'eau entre l'intérieur et l'extérieur du casier, ralentissant ainsi la croissance des coquillages.

De façon habituelle, chaque casier est attaché à la table de manière à ce qu'il ne soit pas renversé par le mouvement de l'eau. Il faut donc d'abord le détacher de la table pour pouvoir le retourner, puis le fixer de nouveau. Ce travail demande beaucoup de main d'oeuvre et de temps puisqu'il nécessite en général qu'une ou plusieurs personnes manipulent un à un les casiers.

On connaît également des systèmes permettant une rotation en cascade des casiers sur la table ou encore des moyens permettant une rotation du casier sur une plage de 180°. Mais ces systèmes nécessitent beaucoup d'espace entre deux casiers successifs sur la table et sont donc peu facile d'utilisation.

On connaît encore des systèmes de cage contenant des casiers et pourvus d'un axe de rotation que l'on peut actionner manuellement mais ces systèmes utilisent des moyens d'entraînement en rotation complexes et nécessitent généralement au préalable de retirer les moyens de blocage en position de la cage.

L'invention a pour but d'éviter ces inconvénients en proposant un système d'élevage de coquillages, notamment d'huîtres, qui permette la rotation rapide et sans efforts des casiers d'élevage par une seule personne, à l'aide d'un matériel simple et donc peu coûteux.

A cet effet, le système d'élevage selon l'invention, qui comporte une table et des casiers, est remarquable en ce que chaque casier comporte une poche pourvue à ses extrémités d'un tourillon de forme polygonale dont une des faces repose sur la table. On peut alors faire tourner le casier d'un tour par l'intermédiaire de ce tourillon, pour favoriser la croissance des huîtres.

Selon un mode de réalisation de l'invention, la table du système d'élevage est composée de longerons longitudinaux munis à intervalles réguliers de paires de tirants dont les extrémités sont dirigées vers le haut et liées l'une à l'autre par l'intermédiaire d'un bracelet. Ce système représente un système de guidage prévu pour recevoir les tourillons des casiers. Chaque casier est posé sur la table de façon à ce que ses tourillons reposent par une de leurs faces entre une paire de tirants. Il n'est pas nécessaire d'ôter le bracelet afin de faire tourner le casier.

Selon une caractéristique de l'invention, chaque casier d'élevage comporte une poche de section triangulaire ou carrée.

Selon un mode de réalisation particulier, la poche dudit casier est fermée à ses extrémités par deux flasques coaxiaux.

Avantageusement, les deux flasques coaxiaux sont réunis par un tube central qui les maintient en place. Ce tube central permet, de plus, de stopper en translation le mouvement du casier. Ledit tube central est lui-même maintenu de chaque côté de l'ensemble au moyen d'une goupille. D'autres tubes peuvent être rajoutés aux encoignures des flasques afin d'aider au maintien en place des deux flasques.

Les tourillons des flasques peuvent également présenter des angles arrondis favorisant ainsi la rotation du casier.

De façon également avantageuse, les flasques coaxiaux présentent des gorges situées en périphérie de leur face interne permettant de loger les bords latéraux de la poche.
Avantageusement, la poche est une bande de matière plastique dont les bords longitudinaux sont logés respectivement dans deux gorges dont sont pourvues les flasques.

Avantageusement les flasques sont gerbables puisque la forme tronconique des tourillons permet de les empiler facilement les uns sur les autres afin d'en faciliter le rangement.

Selon un mode de réalisation particulier de l'invention il est possible de munir la table du système d'élevage d'un moyen permettant de soulever le système d'élevage.

Avantageusement, ce moyen se compose d'élingues.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 est une vue en perspective du système d'élevage dans son ensemble,
La Fig. 2 est une vue en perspective de la table du système d'élevage,
La Fig. 3 est une vue en perspective d'un casier du système d'élevage,
La Fig. 4 est une vue en perspective d'un flasque d'un casier du système d'élevage,
La Fig. 5 est une vue en perspective de l'empilement de plusieurs flasques, et
La Fig. 6 est une vue de côté représentant un tourillon disposé entre une paire de tirants.

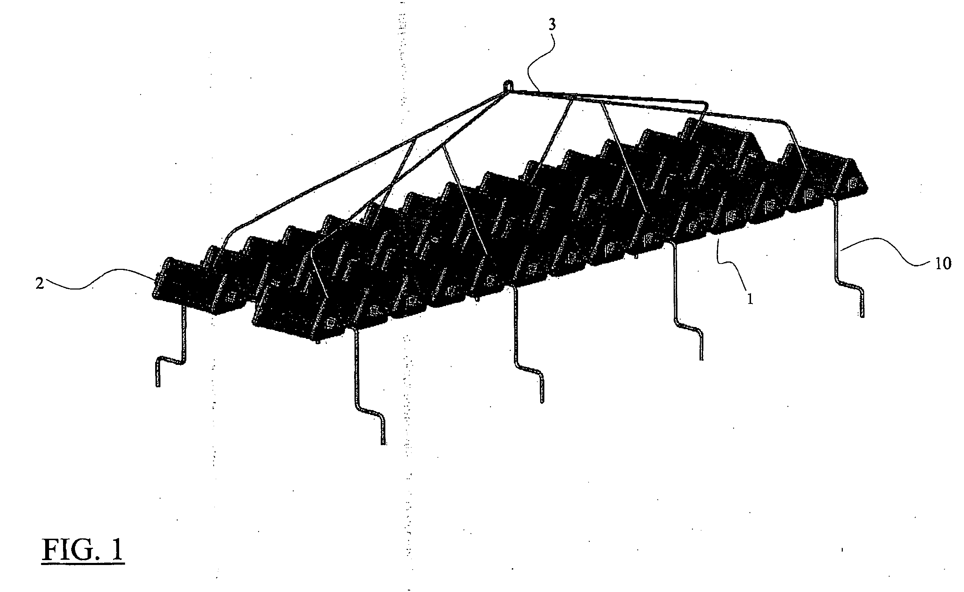

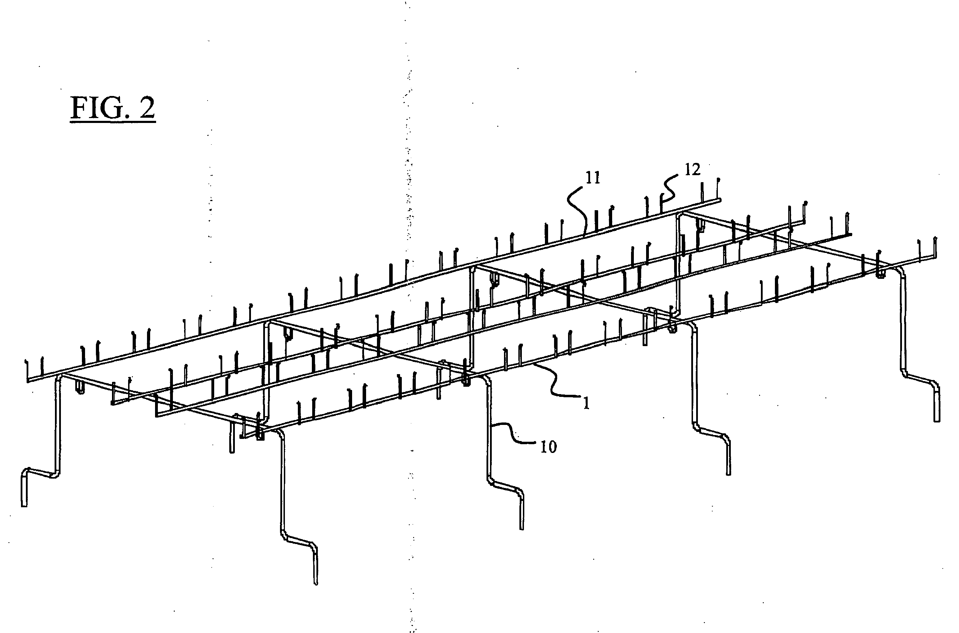

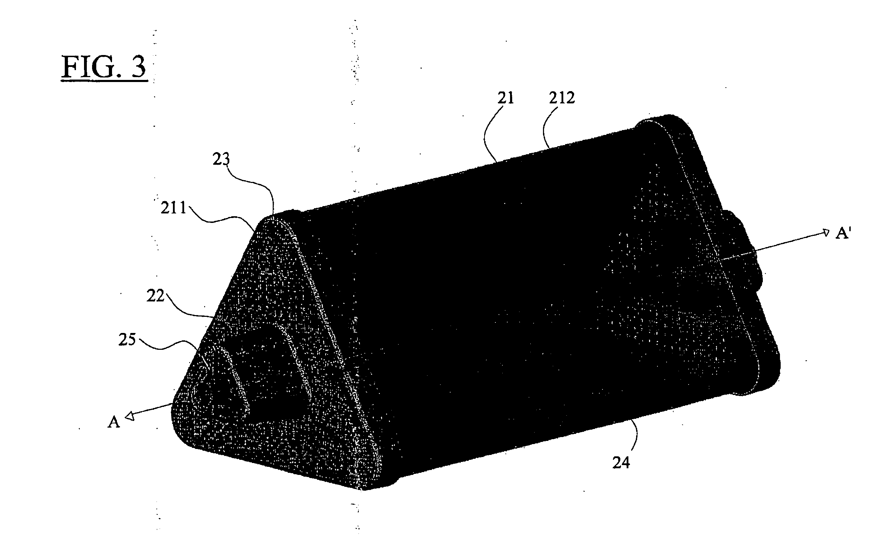

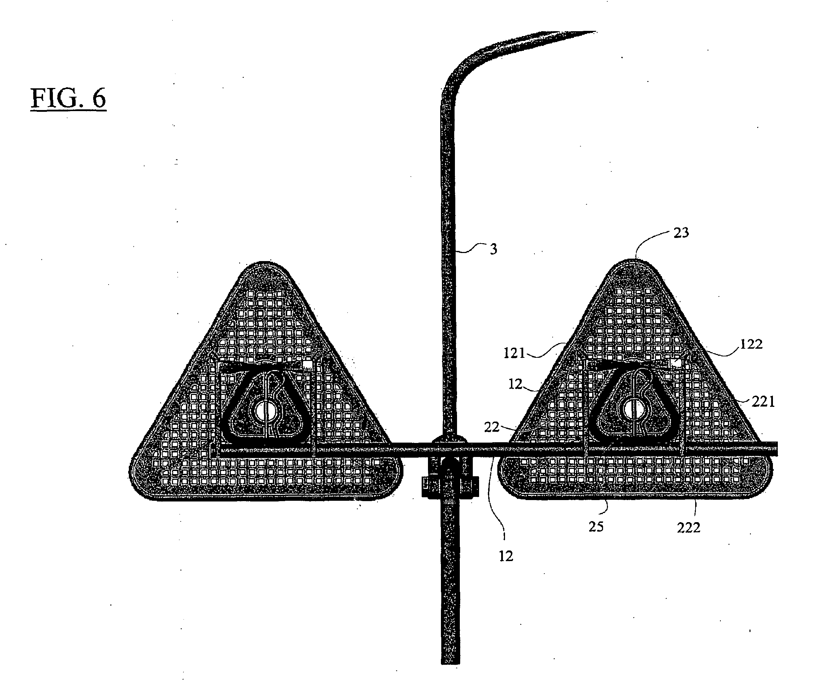

Le système d'élevage de coquillages représenté à la Fig. 1 se compose d'une table 1 sur laquelle sont disposés des casiers 2. Ce système convient particulièrement à la culture d'huîtres.
La table illustrée sur la Fig. 2 repose sur des pieds 10 et se compose d'une ou plusieurs paires de longerons 11 parallèles entre eux et sur lesquels sont disposés, à intervalles réguliers, des paires de tirants 12 constituant un système de guidage pour installer les casiers 2.
Comme illustré par la Fig. 3 chaque casier 2 se compose d'une poche 21 d'où font saillie des tourillons de section polygonale 22 à la surface extérieure de ses deux extrémités 211. Pour mettre en place un casier 2 sur la table 1, les tourillons 22 sont placés entre chaque paire de tirants 12 comme le montre les Figs. 1 et 6. Chaque tourillon 22 repose sur un longeron 11 de la table 1 par une de ses faces 221 (voir Fig. 6). Ainsi, le casier 2 est maintenu en place, entre deux longerons 11 de la table 1, par l'intermédiaire de ses deux tourillons 22 posés sur les longerons 11, comme représenté sur la Fig. 1. Le nombre de casiers disposés sur la table ainsi que la longueur de la table sont fonction des besoins. Afin de maintenir en place les casiers, les tirants 12 des longerons 11 sont tournés vers le haut et leurs extrémités libres 121 sont reliées à l'aide d'un bracelet 122 (comme représenté à la Fig. 6). La rotation d'un casier 2 s'effectue par l'intermédiaire des tourillons 22. Lorsque l'on tourne un casier 2, on lui applique un mouvement de rotation selon l'axe A-A' représenté à la Fig. 3 permettant ainsi de permuter la face 221 qui repose sur le longeron 11. On notera qu'il est parfaitement inutile de retirer le bracelet 122 pour tourner le casier correspondant. De façon avantageuse, les angles 222 des tourillons 22 sont arrondis permettant ainsi la rotation plus facile de chaque casier.

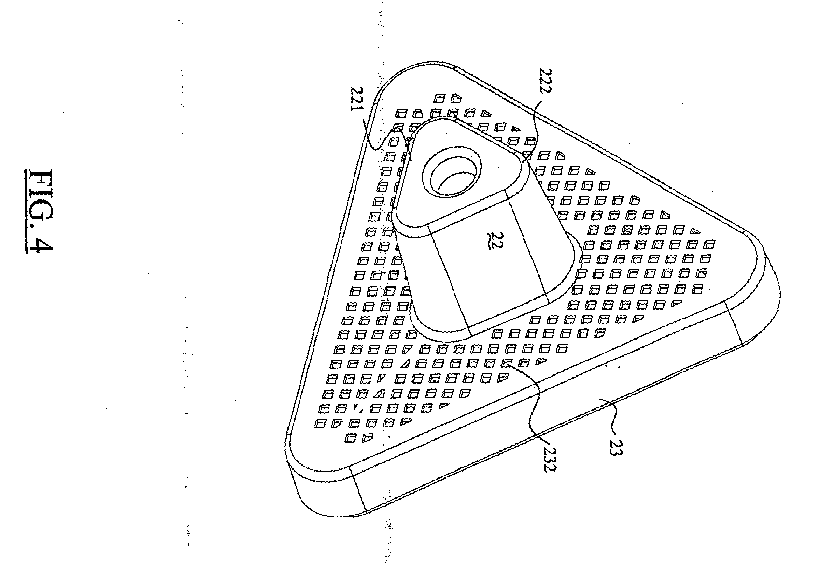

Selon un mode particulier de réalisation de l'invention, la poche 21 de chaque casier 2 est fermée à ses extrémités 211 par des flasques coaxiaux 23 comme représentés aux Figs. 3 et 4. Avantageusement, les flasques 23 sont munis de gorges 231 permettant de loger les bords latéraux de la poche de façon à maintenir lesdits flasques 23 aux extrémités de la poche 21. Avantageusement, la poche 21 est composée d'une bande de matière plastique que l'on plie pour que ces bords longitudinaux se logent respectivement dans deux gorges 231 dont sont pourvues les flasques coaxiaux 23.

Avantageusement, les flasques 23 sont maintenus en place à l'aide d'un tube central 24 longitudinal bloqué en position par des goupilles 25 extérieures. Ledit tube central 24 permet non seulement de maintenir en place les deux flasques coaxiaux 23, mais il permet également de stopper en translation le mouvement du casier 22.

Avantageusement, les flasques 23 présentent une structure grillagée 232 pour permettre l'écoulement des flux d'eau entre l'intérieur et l'extérieur du casier.

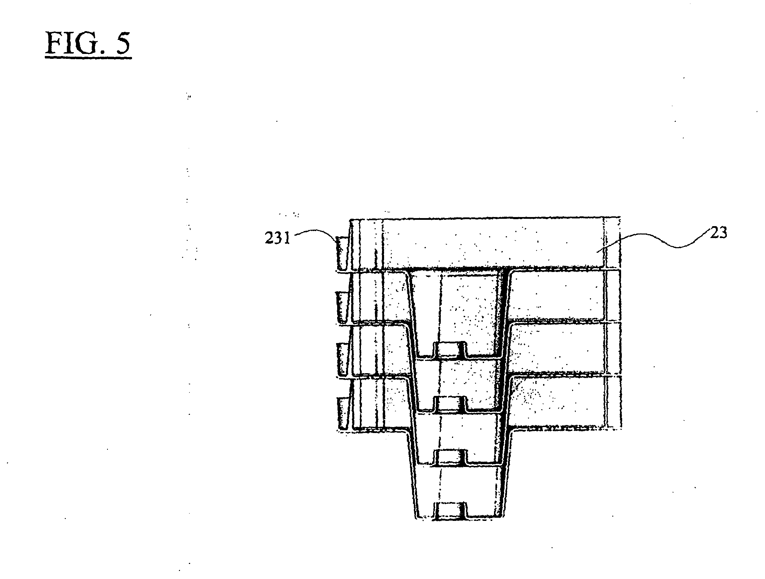

Selon l'exemple représenté à la Fig. 5, les tourillons 22 des flasques 23 ont une forme tronconique ce qui permet de les empiler les uns sur les autres de façon à faciliter leur rangement.

Selon un mode particulier de l'invention, et comme représenté à la Fig. 3, les poches 21 de chaque casier 2 présentent une section polygonale, avantageusement triangulaire ou carrée et les parois des poches sont parallèles aux faces des tourillons 221. Les huîtres reposent ainsi sur une surface horizontale ce qui favorise leur croissance.

Selon le mode de réalisation illustré à la Fig. 1, le système d'élevage de coquillage selon l'invention peut être soulevé par l'intermédiaire d'un système d'élingues 3 disposé sur la table 1. Le système pouvant ainsi être facilement soulevé et déplacé au moyen d'une grue, par exemple.

Il apparaît clairement à partir de cette description, que la manipulation des casiers afin de les tourner est grandement facilitée puisqu'en une seule opération chaque casier est retourné rapidement et sans efforts. De même, le matériel utilisé est d'un coût moins élevé qu'avec les systèmes actuels de l'état de la technique.

## Revendications

1. Système d'élevage de coquillage, notamment d'huîtres, comportant une table (1) constituée d'au moins deux longerons (11) parallèles entre eux et des casiers d'élevage (2) **caractérisé en ce que** chaque casier d'élevage (2) comporte une poche (21) pourvue de deux tourillons (22) à ses extrémités respectives, lesdits tourillons (22) étant de forme polygonale pour pouvoir respectivement reposer sur les longerons (11) de ladite table (1).

2. Système d'élevage selon la revendication 1, **caractérisé en ce que** lesdits tourillons (22) sont guidés sur les longerons (11) par un système de guidage.

3. Système d'élevage selon la revendication 2, **caractérisé en ce que** ledit système de guidage comporte une paire de tirants (12) disposés sur les longerons (11) de la table (1) à intervalles réguliers ct tournés vers le haut.

4. Système d'élevage selon la revendication 3, **caractérisé en ce que** les extrémités des tirants (121) sont liées l'une à l'autre par un bracelet (122).

5. Système d'élevage l'une des revendications précédentes, **caractérisé en ce que** chaque casier d'élevage (2) comporte une poche (21) de section polygonale, avantageusement triangulaire ou carrée.

6. Système d'élevage selon l'une des revendications précédentes, **caractérisé en ce que** les parois de la poche (21) sont parallèles aux parois des tourillons (22).

7. Système d'élevage selon l'une des revendications précédentes, **caractérisé en ce que** ledit casier (2) est fermé à ses extrémités par des flasques (23).

8. Système d'élevage selon la revendication 7, **caractérisé en ce que** lesdits flasques (23) sont munis de gorges (231) permettant de loger les bords latéraux de la poche.

9. Système d'élevage selon les revendications 7 ou 8, **caractérisé en ce que** lesdits flasques (23) possèdent des angles (222) arrondis.

10. Système d'élevage selon les revendications 7 ou 8, **caractérisé en ce que** lesdits flasques (23) sont gerbables.

11. Système d'élevage selon l'une des revendications précédentes, **caractérisé en ce que** la table (1) est pourvue d'un système d'élingues (3) permettant de soulever le système d'élevage.

12. Casier pour élevage (2), **caractérisé en ce qu'**il comporte une poche (21) pourvue à ses extrémités (211) de tourillons (22) de forme polygonale et **en ce qu'**il est fermé à ses extrémités par des flasques (23).
